(19) Europäisches Patentamt
European Patent Office
Office européen des brevets

(11) **EP 3 363 617 A1**

(12) **EUROPEAN PATENT APPLICATION**

(43) Date of publication:
**22.08.2018 Bulletin 2018/34**

(51) Int Cl.:
***B29C 63/00*** *(2006.01)*     ***B29C 63/02*** *(2006.01)*
***B29L 31/30*** *(2006.01)*

(21) Application number: **17156434.7**

(22) Date of filing: **16.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **3M Innovative Properties Company
Saint Paul, MN 55133-3427 (US)**

(72) Inventors:
• **RUDEK, David
40470 Düsseldorf (DE)**

• **KELLER, Thomas
41469 Neuss (DE)**
• **COBLITZ, Burkhart
41372 Niederkrüchten (DE)**
• **ZIMMER, Christoph
41352 Korschenbroich (DE)**

(74) Representative: **Bergen, Katja
3M Deutschland GmbH
OIPC
Carl-Schurz-Strasse 1
41453 Neuss (DE)**

(54) **AN APPARATUS FOR APPLYING A FILM**

(57) The invention relates to an apparatus 1 for applying a film, foil or sheet onto a substrate, the apparatus comprising:
- an upper part 2 and

- a bottom part 3 wherein
- the bottom part 3 comprises an application surface 4 extending in three dimensions.

*FIG. 1*

**Description**

FIELD OF THE INVENTION

The invention relates to an apparatus for applying a film, sheet or foil, e. g. an adhesive film, sheet or foil.

BACKGROUND OF THE INVENTION

Although applicable to any kind of film, sheet or foil adhesively attached to a substrate, the present invention and the problem on which it is based will be explained in greater detail with reference to adhesive paint foils or paint films or paint sheets for vehicle coloration and/or vehicle paint protection. The vehicle may be a boat, a train, an automobile or car, a bus or any other vehicle that provides at least one surface that can be colored or needs protection.

In order to avoid cost-intensive masking procedures, in particular for bi-tone colorations, the automotive industry uses colored film solutions, e. g. adhesively backed film solutions. For example, a colored adhesive film can be applied to the roof of a car in order to achieve a roof color different from the body color. An exemplary sheet adhesion device for adhering an adhesive sheet to a car body is described in WO 01/05902 A2.

In order to be able to apply films to a substrate such that the applied film provides a high visual standard (e. g. no air being trapped between the film and the substrate, no marks or scratches on the surface of the film, no adhesion lines...) several tools have been developed.

US 8,012,280 B1 discloses a film applicator tool for installing a tint film on a window of an automobile or building. The applicator tool includes a body having a tapered front end with a pointed end, and a blade comprising plastic or urethane rubber disposed along a lateral edge of the body. The applicator tool further includes a control recess formed within the top portion of the body for receiving a finger of a hand. The control recess allows a user to control the position and pressure of the tool when applying a tint film on a window.

US 9,126,368 B2 discloses a foil applicator for applying a foil, in particular a self-adhesive foil, to a surface, for instance to a bodywork of a car. The foil applicator comprises an elongated handgrip and a pressing edge, which lies at an angle relative to the hand grip.

US 9,010,397 B2 discloses a hand application tool for the application of a vinyl film material. The application tool includes a head portion having an elongated relatively thin blade member constructed from a substantially rigid material and a handle member that may be attached to the blade member.

Other solutions have been developed, like for examples solutions that reduce the initial tack of the film.

In view of the above there is still a need to provide an apparatus for applying a film, foil or sheet, e. g. and adhesive film, foil or sheet in a high visual standard. This is especially true for thin films, e. g. films having a thickness below 1 mm. This is also especially true for high gloss films, e. g. films having a gloss unit (GU) of greater than 70 (= high gloss), e. g. about 95 GU. Preferably the apparatus for applying a film, film or sheet does not influence the quality of the film.

The measurement scale of gloss units (GU) with the help of a gloss meter is a scaling based on a highly polished reference black glass standard with a defined refractive index having a specular reflectance of 100GU at the specified angle. This standard is used to establish an upper point calibration of 100 with the lower end point established at 0 on a perfectly matte surface. This scaling is suitable for most non-metallic coatings and materials (paints and plastics) as they generally fall within this range. For other materials, highly reflective in appearance (mirrors, plated/raw metal components), higher values can be achieved reaching up to 2000 GU. The GU measurement is done according to DIN EN ISO 2813:2012-10, which is still in a draft status and a combination of DIN 67530 and DIN EN ISO 2813:1999-06.

SUMMARY OF THE INVENTION

The invention relates to an apparatus for applying a film, foil or sheet, e. g. an adhesive film, foil or sheet onto a substrate, wherein the apparatus comprises:

- an upper part,
- a bottom part, wherein
- the bottom part comprises an application surface extending in three dimensions.

In contrast to the above described application tools that provide application edges for pressing the film against the substrate, the inventions provides an application surface that extends into three dimensions. In other words the apparatus according to the invention for applying a film provides an application surface that does not only extend into two dimensions, which would be enough to provide a surface. It also extends into a third dimension.

The apparatus for applying a film according to the invention may be used for applying any kind of film, foil or sheet. It may for example be used for applying a thin, high gloss film. The film may for example be a polyvinyl chloride film or a polyurethane film. The film may consist of one layer or it may be a multilayered film. It may comprise a coating layer and/or an adhesive layer. And it may comprise a liner layer as well. The polymer film may provide a coloured polymer layer further comprising a colourant.

One example of a film that may be applied with a tool according to the invention is a film comprising at least one polymer layer, the at least one polymer layer comprising a polyurethane produced from a formulation comprising at least one blocked isocyanate. The formulation may comprise at least two polyols in an OH weight equivalent ratio in the range 4.5 : 1 to 1 : 4.5 (100 % solids basis). It is also possible that the polyurethane is formed (e. g. by selection of the polyol(s) and/or isocyanate(s)) so as to have a glass transition temperature (Tg) below 42 $\underline{o}$C, preferably below 40 $\underline{o}$C, more preferably below 38 $\underline{o}$C and most preferably below 37 $\underline{o}$C. Dynamic mechanical analysis and sample preparation were performed according to ASTM E1640-09 standard and the standards mentioned therein. Dynamic mechanical measurements were performed on a DMTA V (Rheometric Scientific) in tension mode at a fixed frequency of 1 Hz and fixed strain of 0.05 % in a temperature range from -100 to +150 °C with a heating rate of 2 °C/min. The temperature of the peak of the tangent delta curve was taken to represent the glass transition temperature Tg. Specimens of rectangular shape measuring between 9 x 3 x 0.05 mm and 10 x 4 x 0.15 mm were used. The temperature calibration was done using a Fluke 724 Temperature Calibrator (regularly calibrated by an accredited calibration institute). PVC standards (available through RHEO Service) were measured on the DMTA periodically to check temperature accuracy.

According to one embodiment of the invention, the application surface of the apparatus according to the invention may provide a convex shape extending towards the substrate onto which the film, foil or sheet gets applied. A convex shape of the application surface provides a rounded surface. If such a rounded surface gets in contact with the film, foil or sheet to be applied, the risk of damaging or marking the film, foil or sheet is limited. Thus, an apparatus according to the invention comprising a convex shaped application surface provides a simple solution for applying a film with a high visual standard and without risking to influence the quality of the film.

According to another embodiment, the application surface may provide a substantially circular shape with a diameter between 30 and 800 mm. An application surface with a substantially circular shape allows a multidirectional movement of the tool relative to the substrate. The round shape of the apparatus allows to move it into any direction without turning the apparatus itself. This may be advantageous while applying a film, sheet or foil onto a substrate because it allows to move the apparatus for applying the film in multiple directions. The film, foil or sheet may thus for example be applied by moving the apparatus in circles over the substrate. Any other movements like straight lines, curves etc. are possible as well without having to position the apparatus for applying the film, foil or sheet and its application surface in a defined way before starting with the movement.

According to yet another embodiment of the invention the shape of the application surface may adapt to the contour of the substrate as soon as the apparatus is pressed against the substrate. If for example the application surface provides a convex shape which extends towards the application surface and if the application surface gets pressed against the substrate, the convex shape may adapt itself towards the contour of the substrate. Such a flexible, adaptable application surface provides the advantage of offering an application surface following the surface of the substrate. Thus, the film, foil or sheet may get applied with the help of a surface pressing against the substrate that fits in its shape perfectly to the shape of the substrate. This allows a smooth and reliable way of applying a film, foil or sheet with the result of a high visual standard and high quality of the applied film, foil or sheet, since it provides a continuous pressure gradient from the tool onto the substrate with the film, foil or sheet.

According to another embodiment the application surface of the apparatus according to the invention is designed such that as soon as it gets pressed against the substrate, it adapts its shape to the shape of the substrate such that at the same time a continuous pressure gradient gets applied from the apparatus for applying a film, foil or sheet onto the substrate. The constant pressure along the application line is beneficial compared to application tools known in the prior art, such as for example a squeegee, which may provide an unevenly pressure distribution leading to a surface defect due to a pressure overload. The continuous pressure gradient can for example be achieved by selecting a suitable shape for the bottom part of the apparatus with the application surface and by selecting suitable materials.

It is also possible that all edges of the apparatus for applying a film, foil or sheet - at least in the area of the application surface - provide a radius. Providing radiuses on the edges of the apparatus is another means for preventing damages to the film, foil or sheet to be applied to ensure that the quality does not get influenced.

In order to achieve the above mentioned continuous pressure gradient and in order to achieve the possibility of adapting the shape of the application surface onto the shape of the substrate, the application surface of the bottom part of the apparatus for applying a film, foil or sheet may be compressible. In other words the application surface may be designed such that it is able to change its shape and to adapt its shape to other shapes. It may be elastic and it may be deformable or flexible.

One possibility of achieving the above described compressibility of the application surface is that the bottom part of the apparatus for applying a film, foil or sheet comprises a compressible material or a compressible construction. Examples for compressible materials that may be used for the apparatus according to the invention may for example be rubber, e. g. cellular rubber, sponge like materials, foams, like polyethylene foams ore polyurethane foams, latex foams, silicone, cellular polyurethane, such as for example Vulkollan ®, a polyurethane commercially available from Pleiger Plastics Company, USA or natural materials like for example moss or sponge or any other material that elastically deform when a force gets applied. Examples for compressible constructions may for example be constructions that include a cushion with compressible material or a cushion with a liquid or gas, where in when the liquid or gas is not compressible it might be pressed into a compensating reservoir.

According to yet another embodiment, the application surface may provide a low sliding friction surface. A low sliding friction surface according to the invention is a surface that creates when pushed over the substrate with the film a coefficient of friction that is below 0.25 $\mu$, e. g. 0.1 $\mu$. The sliding friction may be measured according to DIN EN ISO 8295. The measuring process is conducted as follows: an object with a defined weight is attached to a spring balance/force measuring socket of a Zwick testing machine and is moved at a constant speed over a horizontal surface. By measuring the spring force and the weight (= normal force N) of the object the coefficient of friction g = F/N can be determined.

Sliding friction occurs when a body e. g. the apparatus according to the invention slides on another e. g. the film on the support, in other words both bodies are moved relative to each other. In this case, a force which is referred to as a sliding friction force acts on the body under consideration. The sliding friction force is always directed so as to inhibit the movement of the body relative to the other body (film on support). The sliding friction force decreases, the smaller the normal force is and the lower the friction coefficient is. It is independent of the size of the contact surfaces. The sliding friction force can be calculated using the equation:

$$FR = \mu^* \, FN$$

FR = sliding friction force
$\mu$ = friction coefficient
FN = normal force (force normal to the surface)

The sliding friction is based on both materials' contact surface characteristics like roughness (technical) and surface tension and viscosity. If the bodies move relative to each other, the unevenness of the surfaces is "caught". This will inhibit movement. The friction coefficient for sliding steel on steel is about 0.12 $\mu$. The factor for steel on ice is 0.014 $\mu$. The lower the friction factor the better the sliding. The sliding friction force can for example be reduced by reducing the normal force, smoothening the surfaces and/or using lubricants (such as for example oil, grease or water). For the current application a dry application environment is preferred. A low coefficient of friction provides the advantage of a smoother treatment of the film, foil or sheet during the application. Thus the coefficient of friction is another way of minimizing the risk of influencing the quality of the film, foil or sheet.

According to another embodiment of the invention the application surface comprises at least in one area a textile surface. The application surface may for example consist out of a textile which is combined with an elastic material like Polyurethane. It may also be a textile that is used in an injection molding process, where the bottom part gets injected against the textile. The application surface may also comprise flocked fibers.

The application surface of the apparatus according to the invention may also provide at least one coated area. Possible coating materials are materials providing low-surface energy and/or any anti-adhesive characteristics like for example fluoroplastics. Fluoroplastics are known for their extraordinary sliding properties due to anti-adhesive characteristics. Other possible coating materials are for example silicon.

Another optional feature for the application surface is, that it should not increase any static charge when used to apply the film, foil or sheet. The apparatus according to the invention may also provide a potential compensation by grounding the application surface. This may for example be done by providing an electrical grounding device like a guide made of an electrically conducting material or by adding electrical conducting material to the application surface. The application surface may for example comprise particles that are electrically conducting.

According to yet another embodiment of the invention the upper part of the apparatus for applying a film, foil or sheet may provide an ergonomic shape. If the apparatus for applying a film, foil or sheet is used to manually apply the film, an ergonomic shape of the upper part may be advantages because it is easier it hold in a hand of a human being and can therefore be handled more reliable. One example for a more ergonomic shape may be a substantially cylindrical geometry which provides rounded edges. An ergonomic shape may also be any other shape that suits and supports the physics of the human hand (anthropology).

It is also possible that the upper part of the apparatus according to the invention provides a surface that allows for proper and reliable ergonomic feedback to the person who uses the application tool. The surface of the upper part may for example be made out of a rubber like material, a material that provides grip, soft touch. It is possible that the surface of the upper part is coated with a material that provides the ergonomic feedback. The surface may provide a structure, like for example a textured structure, it may also be covered with a textile to provide this structure.

It is also possible that the upper part provides a surface that allows for proper and reliable ergonomic feedback to the person who uses the application tool. The surface of the upper part may for example be made out of a rubber like material, a material that provides grip and soft touch. It is possible that the surface of the upper part is coated with a material that provides the ergonomic feedback. The surface may provide a structure, like for example a three-dimensional texture, or it may also be covered with another material (e. g. textile) to provide this texture.

The upper part and the bottom part may be detachably mounted to each other. This provides the advantage that the bottom part may be exchanged for example for cleaning purposes or if it has been worn off. It is also possible to exchange the bottom part to select an application surface that fits best to the film, foil or sheet to be applied. Upper part and bottom part may attached to each other by all known means for detachable connections, such as for example screws, hook and loop connection means, snap fit means or even by an adhesive.

The apparatus for applying a film according to the invention may also comprise a wheel or ring, which is rotatably fixed to the bottom part or the upper part above the application surface. The wheel or ring may be used to apply the film, foil or sheet in areas with a more complicated design or structure, such as for examples in corners, notches, channels, shaped corners within a roof ditch. The wheel or ring may be rigid or it may be flexible and therewith adaptable to the shape of the substrate. It needs to be rigid enough that it is able to apply the required force for applying the film, foil or sheet onto the surface. As one example the wheel or ring may be made out of an elastic polymer with a shore hardness between Shore A20 and shore A70 in order to easily reach and adapt to application areas. The hardness may be measured according to DIN ISO 7619-1, according to which the tip of a steel pin is pressed with a defined force into the material to be measured. The imprint/penetration depth is measured on a scale between 0 and 100.

According to another embodiment of the invention the apparatus for applying the film may be heatable. It may for example contain materials that are capable for storing a thermal potential, such as for example water or sodium acetate, which is used in heating pads. To heat this device up it may be activated for example by microwaves or in an oven or by any other known means. It is also possible to integrate a heating system into the apparatus for applying a film, which may provide a resistance element with an internal or an external power supply. The application surface of a heatable apparatus may provide a material with a high thermal conductivity so that the heat that is stored, generated in the apparatus may easily be lead towards the film and the substrate.

The apparatus for applying a film according to the invention may provide a trimming and or cutting tool that is integrated and movably mounted into the apparatus. A trimming tool can be used to scratch the film, foil or sheet to be applied. The trimming or cutting tool may be positioned within a plain bearing which is well known in the industry and functions with a lubrication-free plain bearing technology like iglidur ® from igus® Gmbh, a company with its headquarter in Cologne, Germany. The tool may for example be activated via a lever or crank positioned for example on the upper part of the apparatus. It may also by activated by a push button which moves the trimming tool in working position when pushed. By pushing a second time the tool may move back into the application head for example forced by a pressure spring (similar to the functionality of a ball pen).

The invention is also directed to an automated application system for applying an adhesive film, foil or sheet onto a substrate, wherein the system comprises the apparatus described above.

BRIEF DESCRIPTION OF THE DRAWINGS

The invention will now be described in more detail with reference to the following Figures exemplifying particular embodiments of the invention:

Fig. 1	three dimensional side view of an apparatus for applying an adhesive film according to the invention, with an upper part and a bottom part;

Fig. 2	three dimensional side view of the apparatus for applying an adhesive film according to Figure 1, with the upper part being separated from the bottom part;

Fig. 3A, B	schematic side views of a bottom part of an apparatus for applying a film according to the invention;

Fig. 3C, D	schematic bottom views of a bottom part of an apparatus for applying a film according to the invention;

Fig. 4	three dimensional side view of the apparatus for applying a film according to Figure 1 with a diagram showing the pressure when applying the apparatus onto a substrate;

Fig. 5	three dimensional side view of the apparatus for applying a film according to Figure 1 and an application wheel;

Fig. 6	three dimensional side view of the apparatus and wheel of Figure 4 with the wheel being attached to the apparatus for applying a film;

Fig. 7	three dimensional view of the apparatus and wheel of Figure 5 and a body part of a car, while applying a film onto the body part;

Fig. 8A	schematic side view of another embodiment of an apparatus for applying a film according to the invention with an integrated trimming/cutting tool;

Fig. 8B	schematic side view of the apparatus for applying a film according to Figure 8 with the trimming/cutting tool being moved towards the substrate;

Fig. 9	schematic side view of another embodiment of an apparatus for applying a film according to the invention with an integrated heat storage material;

Fig. 10	schematic side view of another embodiment of an apparatus for applying a film according to the invention with an integrated heat generation system, and

Fig. 11	three dimensional drawing of an automated application system according to the invention with a vehicle.

DETAILED DESCRIPTION OF EMBODIMENTS

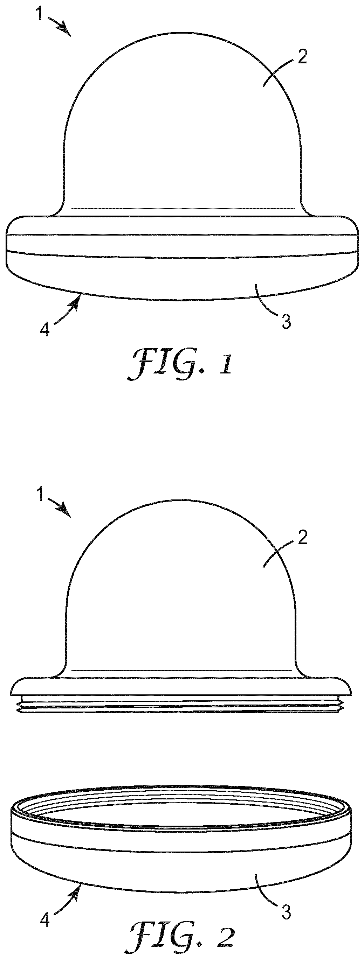

Figure 1 is a three dimensional side view of an apparatus 1 for applying a film, e. g. an adhesive film, according to the invention. It provides an upper part 2, here a handle part, and a base or bottom part 3. The apparatus 1 has a mushroom like shape with the handle part 2 being the stem of the mushroom and the base part 3 being the head of the mushroom. The base part 3 provides an application surface 4, which may be made out of an elastic, flexible material so that it is adaptable to the shape or contour of the surface of a substrate (not shown in figure 1), onto which a film, foil or sheet (also not shown in figure 1) gets applied. The application surface 4 of the apparatus 1 may also be coated or provide a textile surface in order to achieve the required surface properties, that allow an easy movement of the apparatus according to the invention over the film, foil or sheet, without influencing the quality of the film, foil or sheet. The application surface 4 further provides a circular shape and extends convex into the direction of the substrate, when not pressed onto the substrate. The handle part 2 provides a substantially cylindrical shape with a round head. Such a shape is ergonomic and allows an easy manual handling of the apparatus 1. In order to provide an ergonomic grip, the handle part 2 may be made out of a rubber like material or may be coated to achieve a rubber like surface.

Figure 2 is a three dimensional side view of the apparatus for applying a film according to Figure 1, with the upper or handle part 2 being separated from the base or bottom part 3. The handle part 2 and the bottom part 3 may be mounted detachable from each other for example by means of a screw, a hook and loop connection or any other known detachable connections. In the embodiment shown in figure 2 a screw connection between handle part 2 and bottom part 3 is shown. A detachable connection between the two parts of the apparatus 1 according to the invention allows to reuse the handle part 2 even if the bottom part 3 with the application surface 4 is for example worn off. It also allows to adapt the application surface 4 each time the apparatus 1 is used to the according film that gets applied. The area where the two parts of the apparatus 1 are attached to each other may be made out of more rigid material, such as for example an ABS material. This allows for example to directly integrate the screw connection means into the handle part 2 and the bottom part 3.

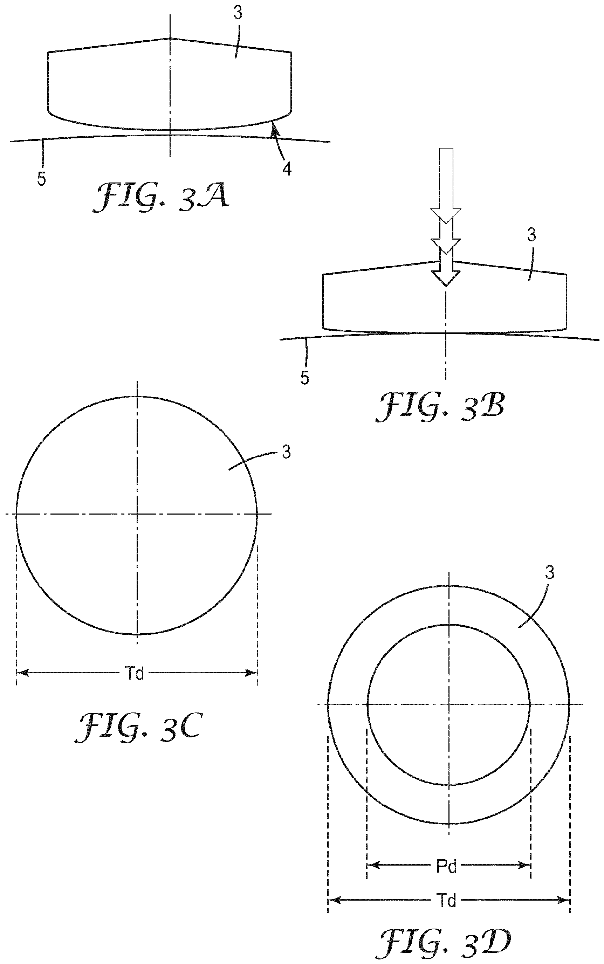

Figures 3A and B are schematic side views of a bottom part 3 of an apparatus 1 for applying a film according to the invention. Figures 3C and D are schematic bottom views of the bottom part 3 of an apparatus 1 for applying a film. In figure 3A the bottom part 3 is shown over a substrate 5 without touching the substrate 5. The bottom part 3 provides a convex shape which extends towards the substrate 5. In figure 3B the bottom part 3 is pressed against the substrate and it can be seen that the application surface 4 of the bottom part adapts its contour to the shape of the substrate 5. Figures 3C and D show the same two situations as figures 3A and B from a bottom view. In figure 3C the diameter Td from the application surface can be seen. In figure 3D an additional diameter Pd, which is the diameter from the area of the application surface being pressed against the substrate.

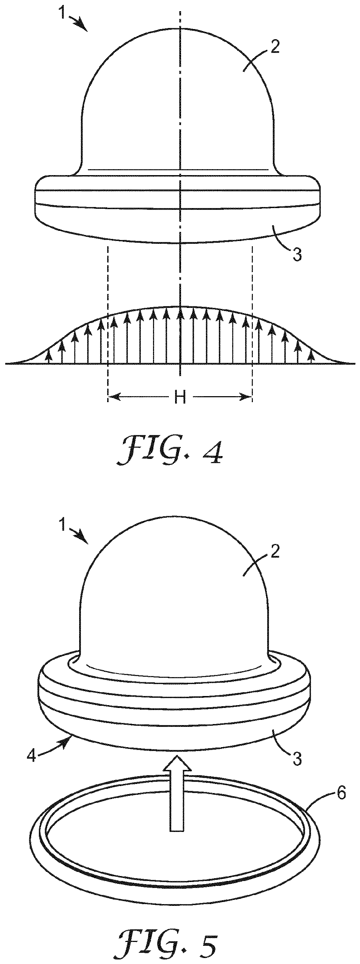

Figure 4 is again a three dimensional side view of the apparatus 1 for applying a film according to Figure 1 together with a diagram showing the pressure when applying the apparatus 1 onto a substrate 5. As can be seen from the diagram, in the middle section of it, the pressure is more or less constant and on the edges the pressure decreases slowly. This means that the entire pressure gradient is smooth and provides no drastic pressure changes over the entire area, where the apparatus according to the invention is in contact with the film onto the substrate 5. This configuration provides a smooth treatment of the film and therefore does not influence the quality of the film. Thus, the apparatus 1 according to the invention provides a tool that allows film application with a high visual standard of the film and without influencing the quality of the film.

This is especially true for the above described kind of films.

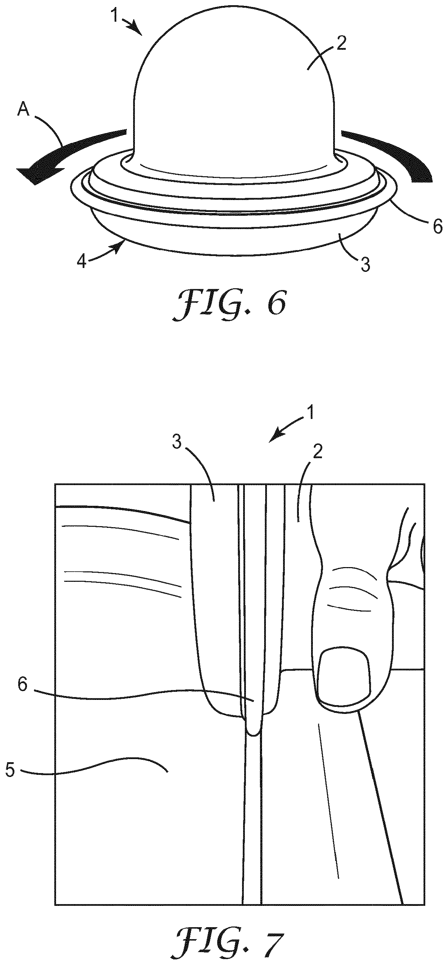

Figure 5 is a three dimensional side view of the apparatus 1 for applying an adhesive film according to figure 1 and an application wheel 6 or ring. Figure 6 shows the apparatus of figure 5 with the wheel 6 being mounted on it. The wheel 6 may for example be mounted rotatably on the apparatus 1, as indicated with the arrow A. It may be mounted over the application surface 4 either only on the bottom part 3, only on the upper part 2 or where both parts are connected with each other. The wheel 6 may also be made out of flexible material so that it may adapt its shape to the shape of the substrate. The wheel may especially be used for areas that provide angles, corners, channels etc. It is also possible that the wheel 6 is rigid and provides exactly the shape of the angle, corner or channel the film needs to get applied to. The wheel 6 may also be mounted on the apparatus 1 so that it cannot rotate relative to the application surface 4. If the surface of the wheel 6 is made of a material providing a low friction surface, it may not be necessary to have a rotatably mounted wheel.

Figure 7 is a three dimensional view of the apparatus 1 with wheel 6 of figure 5 and a portion of car body (substrate 5) with a film to be applied onto the body part of the car. The portion of the car body is completely covered by the film. The portion of the car body provides a channel into which the film needs to be applied. The outer radius of the wheel 6 corresponds to the radius of the channel. With such configuration it is possible to reliably apply a force onto the film within the channel to ensure that the film gets properly applied within the channel. The wheel 6 can also be used to apply the film in other geometrically difficult areas like corners or notches.

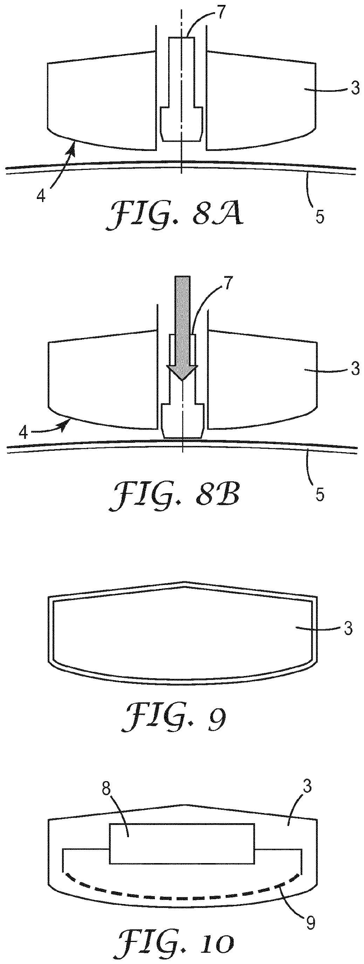

Fig. 8A is a schematic side view of another embodiment of an apparatus for applying an adhesive film according to the invention with an integrated trimming/cutting tool 7. The trimming/cutting tool 7 may be movably mounted within the apparatus according to the invention, e. g. within the bottom part 3 or within the upper part 2 or within both. Figure 8A shows the trimming/cutting tool 7 integrated within the bottom part 3. In figure 8A the trimming/cutting tool 7 does not extend above the application surface 4. Therefore the apparatus according to the invention can be used - as described above - for applying a film onto a substrate 5. In figure 8B the apparatus according to the invention is shown with a trimming/cutting tool 7 extending above the application surface 4. In this condition that apparatus according to the invention cannot be used to apply a film. It can only be used to cut or trim a film, e. g. which has already been applied onto a substrate 7. The trimming/cutting tool 7 can also extend out of the apparatus at any other location, e. g. in the handle part 2 or between the two parts (handle part 2 and bottom part 3).

Figure 9 is a schematic side view of another embodiment of the bottom part 3 of an apparatus for applying a film. The bottom part 3 differs from the above described bottom parts 3 in that it comprises a filling out of a material with a high thermal capacity. In other words the material within the bottom part 3 allows storing of thermal energy. It may for example be heated by putting it into a microwave or any other kind of oven. After being heated it may be used for applying a film onto a substrate. Since the material stores the heat for quite some while, the heat may be used during the application process to warm up the film to be applied and/or the substrate. As shown in figure 10 which is a schematic side view of another bottom part 3 with an integrated heat system. The system provides an energy source, e. g. an integrated battery 8 as well as a resistive element 9, which is electrically connected with the battery 8. By electrically activating the resistive element 9 heat gets generated, which may be used the same way as described with reference to Figure 9.

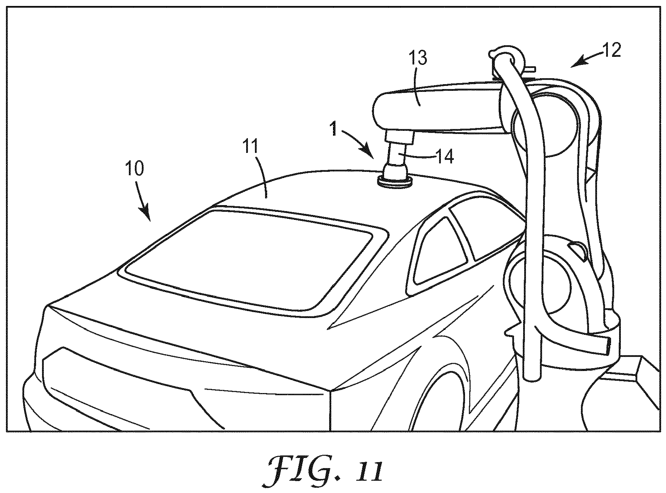

Figure 11 is a three dimensional drawing of an automated application system 12 according to the invention and a vehicle 10. The vehicle 10 provides a roof 11 onto which a film gets applied. For applying a film the automated application system 12 is used. It provides a robot arm 13 with a mounting element 14. At the end of the mounting element 14 an apparatus 1 for applying a film according to the invention is mounted. The apparatus 1 provides a bottom part 3 with an application surface as well as an upper part 2. The upper part 2 is used for mounting the apparatus 1 to the robot arm 13 of the system 12.

**Claims**

1. An apparatus (1) for applying a film, foil or sheet onto a substrate (5), the apparatus comprising:

   - an upper part (2) and
   - a bottom part (3)wherein
   - the bottom part (3) comprises an application surface (4) extending in three dimensions.

2. The apparatus for applying a film according to claim 1, wherein the application surface (4) provides a convex shape extending towards the substrate (5) onto which the film, foil or sheet gets applied.

3. The apparatus for applying a film according to any of the preceding claims, wherein the application surface (4) provides a substantially circular shape with a diameter between 30 and 800 mm.

4. The apparatus for applying a film according to claim 1 or 2, wherein the shape of the application surface (4) adapts to the contour of the substrate (5) as soon as the apparatus (1) is pressed against the substrate (5).

5. The apparatus for applying a film according to any of the preceding claims, wherein all edges of the apparatus (1) for applying a film, foil or sheet - at least in the area of the application surface (4) - provide a radius.

6. The apparatus for applying a film according to any of the preceding claims, wherein the application surface (4) of the bottom part (3) is compressible.

7. The apparatus for applying a film according to any of the preceding claims, wherein the application surface (4) provides a low sliding friction surface.

8. The apparatus for applying a film according to any of the preceding claims, wherein the application surface (4) comprises at least in one area a textile surface or at least one coated area.

9. The apparatus for applying a film according to any of the preceding claims, wherein the upper part (2) provides an ergonomic shape.

10. The apparatus for applying a film according to any of the preceding claims, wherein the upper part (2) and the bottom part (3) are detachably mounted to each other.

11. The apparatus for applying a film according to any of the preceding claims, wherein the apparatus (1) comprises a wheel (6), which is rotatably fixed to the bottom part (3) of apparatus (1) above the application surface.

**12.** The apparatus for applying a film according to any of the preceding claims, wherein the apparatus (1) is heatable.

**13.** The apparatus for applying a film according to any of the preceding claims, with a trimming/cutting tool (7) that is integrated and movably mounted into the apparatus (1).

**14.** Automated application system for applying an adhesive film, foil or sheet onto a substrate (5), wherein the system comprises the apparatus (1) according to any of the preceding claims.

FIG. 1

FIG. 2

FIG. 3A

FIG. 3B

FIG. 3C

FIG. 3D

*FIG. 4*

*FIG. 5*

FIG. 6

FIG. 7

FIG. 8A

FIG. 8B

FIG. 9

FIG. 10

*FIG. 11*

Europäisches
Patentamt

European
Patent Office

Office européen
des brevets

# EUROPEAN SEARCH REPORT

Application Number

EP 17 15 6434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>A | WO 01/05902 A2 (3M INNOVATIVE PROPERTIES CO [US]) 25 January 2001 (2001-01-25)<br>* page 1, line 4 *<br>* page 3, line 24 - page 4, line 18 *<br>* page 7, line 7 - line 15 *<br>* figures 1-4, 7, 9 *<br>----- | 1,2,4-8,<br>10-14<br>3,9 | INV.<br>B29C63/00<br>B29C63/02<br><br>ADD.<br>B29L31/30 |
| X<br><br>A | WO 00/43220 A1 (3M INNOVATIVE PROPERTIES CO [US]) 27 July 2000 (2000-07-27)<br>* page 1, line 3 - line 17 *<br>* page 10, line 25 - page 12, line 29 *<br>* figure 2 *<br>----- | 1,2,4-14<br><br>3 | |
| X<br><br><br>A | EP 0 339 275 A2 (SOMAR CORP [JP]; HITACHI TECHNO ENG [JP])<br>2 November 1989 (1989-11-02)<br>* column 1, line 7 - line 16 *<br>* column 2, line 16 - line 20 *<br>* column 3, line 12 - line 20 *<br>* column 4, line 22 - line 24 *<br>* column 6, line 31 - column 7, line 13 *<br>* column 9, line 7 - line 30 *<br>* column 10, line 23 - line 35 *<br>* figures 1, 6, 8A-8C *<br>----- | 1-8,10,<br>12-14<br><br>9,11 | |
| X<br><br>A | US 2015/352822 A1 (NIEBLING CURT [DE] ET AL) 10 December 2015 (2015-12-10)<br>* paragraph [0002] *<br>* paragraph [0034] *<br>* paragraph [0097] - paragraph [0100] *<br>* paragraph [0105] - paragraph [0107] *<br>* paragraph [0114] *<br>* figures 1-4 *<br>----- | 1-8,10,<br>12,14<br>9,11 | |

TECHNICAL FIELDS
SEARCHED (IPC)

B29C
B29L

The present search report has been drawn up for all claims

| Place of search | Date of completion of the search | Examiner |
|---|---|---|
| Munich | 21 July 2017 | Dias, Filipe |

EPO FORM 1503 03.82 (P04C01)

## ANNEX TO THE EUROPEAN SEARCH REPORT
## ON EUROPEAN PATENT APPLICATION NO.

EP 17 15 6434

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2017

| Patent document cited in search report | | Publication date | Patent family member(s) | | Publication date |
|---|---|---|---|---|---|
| WO 0105902 | A2 | 25-01-2001 | AU | 5784300 A | 05-02-2001 |
| | | | CN | 1364111 A | 14-08-2002 |
| | | | DE | 60033155 T2 | 13-12-2007 |
| | | | EP | 1198531 A2 | 24-04-2002 |
| | | | JP | 2001040296 A | 13-02-2001 |
| | | | WO | 0105902 A2 | 25-01-2001 |
| WO 0043220 | A1 | 27-07-2000 | AU | 2857400 A | 07-08-2000 |
| | | | BR | 0007687 A | 29-01-2002 |
| | | | CA | 2360037 A1 | 27-07-2000 |
| | | | CN | 1341057 A | 20-03-2002 |
| | | | DE | 60004966 D1 | 09-10-2003 |
| | | | DE | 60004966 T2 | 22-07-2004 |
| | | | EP | 1147019 A1 | 24-10-2001 |
| | | | JP | 4373014 B2 | 25-11-2009 |
| | | | JP | 2002535170 A | 22-10-2002 |
| | | | US | 2007000606 A1 | 04-01-2007 |
| | | | US | 2014060743 A1 | 06-03-2014 |
| | | | US | 2015000835 A1 | 01-01-2015 |
| | | | WO | 0043220 A1 | 27-07-2000 |
| EP 0339275 | A2 | 02-11-1989 | DE | 68926361 D1 | 05-06-1996 |
| | | | DE | 68926361 T2 | 28-11-1996 |
| | | | EP | 0339275 A2 | 02-11-1989 |
| | | | US | 5078820 A | 07-01-1992 |
| US 2015352822 | A1 | 10-12-2015 | CN | 105189138 A | 23-12-2015 |
| | | | DE | 102013000400 A1 | 17-07-2014 |
| | | | EP | 2943353 A1 | 18-11-2015 |
| | | | US | 2015352822 A1 | 10-12-2015 |
| | | | WO | 2014108335 A1 | 17-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0105902 A2
- US 8012280 B1
- US 9126368 B2
- US 9010397 B2